# EUROPÄISCHE PATENTANMELDUNG

(11) **EP 4 647 141 A1**
(43) Veröffentlichungstag der Anmeldung: **12.11.2025**
(21) Anmeldenummer: 25168808.1
(22) Anmeldetag: 07.04.2025
(51) Int. Cl.: B01D 29/62, D06F 58/22

(54) **FILTERSYSTEM FÜR EIN WÄSCHEBEHANDLUNGSGERÄT**

(30) Priorität: 07.05.2024 DE 102024204263
(71) Anmelder: BSH Hausgeräte GmbH, 81739 München (DE)
(72) Erfinder: Jahnke, Heiko, 16341 Panketal (DE); Albayrak, Hasan Gökcer, 14476 Potsdam (DE); Genc, Kemal, 12347 Berlin (DE); Brixner, Christian, 10719 Berlin (DE)

(57) **Zusammenfassung**

Die Erfindung betrifft ein Filtersystem (2) für ein Wäschebehandlungsgerät, umfassend eine Partikelfiltereinrichtung (4), welche zwischen einem Zulauf (5) und einem Ablauf (6) angeordnet ist. Die Partikelfiltereinrichtung (4) ist zulaufseitig mit einer Filterfläche (10) ausgestattet, welche für ein Abscheiden von Partikeln aus einem von dem Zulauf (5) über die Partikelfiltereinrichtung (4) zu dem Ablauf (6) geführten Fluid vorgesehen ist. Zudem ist eine Reinigungseinrichtung (11) vorgesehen, welche einem Abführen von an der Filterfläche (10) der Partikelfiltereinrichtung (4) abgeschiedenen Partikeln in ein Depot (17) dient, mit dem die Partikelfiltereinrichtung (4) dazu seitens des Zulaufs (5) räumlich verbindbar ist. Dabei umfasst die Reinigungseinrichtung (11) eine Heizvorrichtung (12), die in ihrem Heizbetrieb die Filterfläche (10) der Partikelfiltereinrichtung (4) aufheizt, wobei die Reinigungseinrichtung (11) zudem eine Fördervorrichtung (13) aufweist, die in ihrem Förderbetrieb an der Filterfläche (10) eine in Richtung des Depots (17) wirkenden Luftströmung erzeugt.

## Beschreibung

Die Erfindung betrifft ein Filtersystem für ein Wäschebehandlungsgerät, insbesondere für eine Waschmaschine oder einen Waschtrockner, umfassend eine Partikelfiltereinrichtung, welche zwischen einem Zulauf und einem Ablauf angeordnet ist, wobei die Partikelfiltereinrichtung zulaufseitig mit einer Filterfläche ausgestattet ist, welche für ein Abscheiden von Partikeln aus einem von dem Zulauf über die Partikelfiltereinrichtung zu dem Ablauf geführten Fluid vorgesehen ist, und wobei eine Reinigungseinrichtung vorgesehen ist, welche einem Abführen von an der Filterfläche der Partikelfiltereinrichtung abgeschiedenen Partikeln in ein Depot dient, mit dem die Partikelfiltereinrichtung dazu seitens des Zulaufs räumlich verbindbar ist. Des Weiteren betrifft die Erfindung ein Verfahren zum Betreiben eines vorgenannten Filtersystems sowie ein Wäschebehandlungsgerät mit einem vorgenannten Filtersystem.

Aufgrund der gestiegenen Belastung der Umwelt mit Mikroplastik werden seit einigen Jahren unterschiedlichste Maßnahmen ergriffen, um Mikroplastik zu reduzieren bzw. zu vermeiden. Während bei Pflegeprodukten, wie beispielsweise Cremes, Duschgelen oder auch Zahnpasta die Verwendung von Mikroplastikteilchen nach Möglichkeit reduziert wurde, um Belastungen des Abwassers mit Mikroplastik zu reduzieren, kommen im Bereich moderner Wäschebehandlungsgeräte häufig Filtersysteme mit Partikelfiltereinrichtungen zur Anwendung, über welche bei dem jeweiligen Wäschebehandlungsgerät Partikel in Form von Mikroplastik und auch Flusen jeweils aus einem ab- oder umzupumpenden Prozessfluid abgeschieden werden können und dann üblicherweise in einem Partikelspeicher der jeweiligen Partikelfiltereinrichtung zurückgehalten werden. Hierdurch kann zum Beispiel beim Waschen synthetischer Kleidung, welche Kunststoffe wie Polyacryl oder Polyester enthält, eine Belastung des Abwassers mit Mikroplastik reduziert werden. Um dabei stets ein zuverlässiges Abscheiden von Partikeln und Flusen aus dem Prozessfluid über die jeweilige Partikelfiltereinrichtung zu gewährleisten, sind bei Filtersystemen teilweise auch Reinigungseinrichtungen vorgesehen, über die an der jeweiligen Partikelfiltereinrichtung abgeschiedenen Partikel in ein jeweiliges Depot abgeführt werden können, so dass ein Beladungsgrad der Partikelfiltereinrichtung stets ausreichend niedrig gehalten werden kann.

So offenbart die EP 3 988 698 A1 ein Wäschebehandlungsgerät in Form einer Waschmaschine, die mit einem Filtersystem ausgestattet ist. Das Filtersystem umfasst dabei eine Partikelfiltereinrichtung, die einen Zulauf von einem Ablauf für Fluid trennt, wobei die Partikelfiltereinrichtung dabei für ein Abscheiden von Partikeln aus dem als Flüssigkeit in Form von Wasser oder Waschlauge vorliegenden Fluid vorgesehen ist. Für das Abscheiden verfügt die Partikelfiltereinrichtung, welche insbesondere als Mikropartikelfilter ausgeführt ist, über eine Filterfläche in Form einer Filtermembran, an der Partikel aus dem von dem Zulauf zu dem Ablauf strömenden Fluid abgeschieden werden. Darüber hinaus ist bei einer Variante der EP 3 988 698 A1 eine Reinigungseinrichtung vorgesehen, die sich aus einer rotierbaren Bürste und einem Depot zusammensetzt. Bei einem Entfernen der Partikelfiltereinrichtung kann die Bürste angetrieben werden, wodurch die Bürste an der Filterfläche abgeschiedenen Partikel gegen eine zulaufseitig ausgestaltete Sperrwand der Reinigungseinrichtung bürstet. Hiervon ausgehend werden die abgebürsteten Partikel dann beim weiteren Entfernen der Partikelfiltereinrichtung in das Depot überführt.

Ausgehend vom vorstehend beschriebenen Stand der Technik ist es nun die Aufgabe der vorliegenden Erfindung ein Filtersystem für ein Wäschebehandlungsgerät zu schaffen, wobei bei diesem Filtersystem eine Reinigung einer Partikelfiltereinrichtung möglichst bedienerfreundlich und gleichzeitig auf zuverlässige Weise möglich sein soll.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Verfahren zum Betreiben eines erfindungsgemäßen Filtersystems ist zudem Gegenstand der Ansprüche 12 bis 15. Schließlich betrifft noch Anspruch 16 ein Wäschebehandlungsgerät mit einem erfindungsgemäßen Filtersystem.

Gemäß der Erfindung umfasst ein Filtersystem eine Partikelfiltereinrichtung, welche zwischen einem Zulauf und einem Ablauf angeordnet ist. Dabei ist die Partikelfiltereinrichtung zulaufseitig mit einer Filterfläche ausgestattet, welche für ein Abscheiden von Partikeln aus einem von dem Zulauf über die Partikelfiltereinrichtung zu dem Ablauf geführten Fluid vorgesehen ist. Ferner ist eine Reinigungseinrichtung vorgesehen, welche einem Abführen von an der Filterfläche der Partikelfiltereinrichtung abgeschiedenen Partikeln in ein Depot dient, mit dem die Partikelfiltereinrichtung dazu seitens des Zulaufs räumlich verbunden werden kann.

Das erfindungsgemäße Filtersystem ist also für eine Anwendung bei einem Wäschebehandlungsgerät vorgesehen, bei welchem es sich um eine Waschmaschine, einen Wäschetrockner oder auch einen Waschtrockner handeln kann. Konkret kann das Filtersystem dabei für eine Integration in das Wäschebehandlungsgerät ausgestaltet sein, d.h. das erfindungsgemäße Filtersystem ist innerhalb eines Gerätegehäuse des Wäschebehandlungsgeräts liegend anzuordnen. In diesem Fall müssten die Komponenten des Filtersystems dann auch nicht in einem zusätzlichen Gehäuse aufgenommen sein, sondern wären im einfachsten Fall lediglich von dem Gerätegehäuse des Wäschebehandlungsgeräts umgeben. Allerdings wäre auch bei Aufnahme im Gerätegehäuse eine separate Kapselung der Komponenten des erfindungsgemäßen Filtersystems in einem weiteren Gehäuse denkbar. Alternativ könnte das erfindungsgemäße Filtersystem aber generell auch für eine externe Anordnung an einem Wäschebehandlungsgerät ausgebildet sein, wobei das Filtersystem dann für eine außenliegende Anordnung an einem Gerätegehäuse des Wäschebehandlungsgeräts vorgesehen ist und dazu insbesondere ein Gehäuse aufweist, in welchem die Komponenten des Filtersystems aufgenommen sind. In diesem Fall weist dieses Gehäuse dann bevorzugt eine Revisionsöffnung auf, über welche die Komponenten des Filtersystems von außen zugänglich sind.

Das Filtersystem weist eine Partikelfiltereinrichtung auf, welche dafür vorgesehen ist, aus einem Fluid Partikel abzuscheiden, wobei es sich bei dem Fluid dabei bevorzugt um ein Prozessfluid des Wäschebehandlungsgeräts handelt. Ist das Haushaltsgerät als Waschmaschine ausgeführt, so liegt das Prozessfluid insbesondere als Flüssigkeit in Form von Wasser oder Waschlauge vor, wobei das erfindungsgemäße Filtersystem dabei ablaufseitig eines Laugenbehälters vorgesehen ist, aus welchem die Flüssigkeit dann in bestimmten Prozessschritten der Waschmaschine dem Zulauf des erfindungsgemäßen Filtersystems zugeführt wird. Hingegen handelt es sich bei Ausgestaltung des Haushaltsgeräts als Wäschetrockner bei dem Prozessfluid um Prozessluft, welche bei Ausführung des Wäschetrockners als Kondensations- oder Wärmepumpentrockner zumindest bei einzelnen Prozessschritten im Kreis gefördert und bei dieser Kreisförderung über das Filtersystem geführt wird. Im Falle einer Ausführung des Haushaltsgeräts als Waschtrockner kann das Prozessfluid hingegen je nach Prozessschritt des Waschtrockners als Wasser oder Waschlauge oder als Prozessluft vorliegen.

Das Filtersystem weist einen Zulauf auf, über welchen das zu filternde Fluid dem Filtersystem zugeführt werden kann. Neben dem Zulauf ist außerdem noch ein Ablauf vorhanden, der von dem Zulauf über eine zwischenliegende Partikelfiltereinrichtung des Filtersystems getrennt ist und einer Abführung von gefiltertem Fluid aus dem Filtersystem dient. Mittels der Partikelfiltereinrichtung können dabei Partikel aus dem von dem Zulauf zu dem Ablauf geführten Fluid abgeschieden werden, wobei dies dabei an einer Filterfläche der Partikelfiltereinrichtung stattfindet.

Bevorzugt ist die Filterfläche bei der Partikelfiltereinrichtung an einem Filterelement der Partikelfiltereinrichtung gebildet, wobei das Filterelement hierbei insbesondere siebartig gestaltet ist, alternativ aber auch als Membran vorliegen kann. Besonders bevorzugt ist die Partikelfiltereinrichtung als fest im Filtersystem verbaute Einrichtung ausgestaltet, so dass auch das bevorzugt vorgesehene Filterelement als fest verbaute Komponente innerhalb des erfindungsgemäßen Filtersystems vorliegt. Alternativ kann das Filterelement in dem Filtersystem aber auch als austauschbare Filterkartusche realisiert sein, welche bedarfsweise gewechselt wird. Besonders bevorzugt ist die Partikelfiltereinrichtung als Mikrofilter gestaltet, welche insbesondere für ein Abscheiden von Mikroplastikteilchen und Flusen aus dem Fluid vorgesehen ist.

Des Weiteren verfügt das erfindungsgemäße Filtersystem über eine Reinigungseinrichtung, welche dazu ausgestaltet ist, an der Filterfläche der Partikelfiltereinrichtung abgeschiedene Partikel in ein Depot abzuführen und damit die Partikelfiltereinrichtung zu reinigen. Dementsprechend dient das Depot der Reinigungseinrichtung der Aufnahme und dem Zurückhalten der über die Partikelfiltereinrichtung abgeschiedenen Partikel. Um dabei die abgeschiedenen Partikel aufnehmen zu können, kann das Depot gezielt mit der auf Seiten des Zulaufs liegenden Filterfläche räumlich verbunden werden.

Die Erfindung umfasst nun die technische Lehre, dass die Reinigungseinrichtung eine Heizvorrichtung umfasst, die in ihrem Heizbetrieb die Filterfläche der Partikelfiltereinrichtung aufheizt. Zudem weist die Reinigungseinrichtung eine Fördervorrichtung auf, die in ihrem Förderbetrieb an der Filterfläche eine in Richtung des Depots wirkenden Luftströmung erzeugt.

Mit anderen Worten verfügt die Reinigungseinrichtung also über eine Heizvorrichtung, welche in einem Heizbetrieb betrieben werden kann und in diesem Heizbetrieb die Filterfläche der Partikelfiltereinrichtung erhitzt. Neben der Heizvorrichtung ist ferner noch eine Fördervorrichtung vorhanden, welche in einem Förderbetrieb betreibbar ist, in dem die Fördervorrichtung eine Luftströmung hervorruft. Diese Luftströmung wirkt dabei von der Filterfläche der Partikelfiltereinrichtung in Richtung des Depots.

Eine derartige Ausgestaltung eines Filtersystems hat dabei den Vorteil, dass durch das gezielte Aufheizen der Partikelfiltereinrichtung über die Heizvorrichtung in Kombination mit der Erzeugung einer Luftströmung in Richtung des Depots eine zuverlässige Reinigung der Partikelfiltereinrichtung realisiert werden kann, wodurch fortlaufend eine Funktionstüchtigkeit der Partikelfiltereinrichtung gewährleistet werden kann, ohne dass diese ausgetauscht werden muss. Denn durch das Aufheizen kommt es zu einem Trocknen der Filterfläche und außerdem zu einem Pulverisieren von abgeschiedenen Partikeln und sonstiger Stoffe, wobei das so gebildete Pulver im Folgenden dann problemlos mittels der Fördervorrichtung über die Luftströmung in das Depot überführt werden kann. Somit wird eine übermäßige Beladung der Partikelfiltereinrichtung mit Partikeln und sonstigen Verunreinigungen verhindert, was ansonsten mit steigender Beladung die Funktion der Partikelfiltereinrichtung beeinträchtigen und insbesondere auch die Führung des Fluids von dem Zulauf zu dem Ablauf erschweren würde. Insgesamt kann dadurch eine zuverlässige Reinigung der Partikelfiltereinrichtung verwirklicht werden, ohne dass einer Handlung einer Bedienperson bedarf.

Bei dem erfindungsgemäßen Filtersystem wird sich dem Effekt bedient, dass es beim Erhitzen der Filterfläche der Partikelfiltereinrichtung über die Heizvorrichtung zu einem Trocknen und Pulverisieren der an der Filterfläche abgeschiedenen Stoffe kommt, wobei dabei als positiver Nebeneffekt zudem ein Zusammenbündeln dieser Stoffe stattfindet. Diese pulverisierten Stoffe können in der Folge dann auch im Förderbetrieb der Fördervorrichtung einfach über die wirkende Luftströmung in Richtung des Depots gefördert und hier gespeichert werden, wodurch durch Zusammenspiel von Heizvorrichtung und Förderervorrichtung der Reinigungseinrichtung insgesamt die zuverlässige Reinigung der Partikelfiltereinrichtung möglich wird. Wird über die Partikelfiltereinrichtung zudem ein Fluid in Form einer Flüssigkeit gefiltert, so kann die Heizvorrichtung in ihrem Heizbetrieb zudem für ein Trocknen der Filterfläche sorgen.

Die Heizvorrichtung der Reinigungseinrichtung heizt in ihrem Heizbetrieb die Filterfläche der Partikelfiltereinrichtung auf, wobei dieses Aufheizen hierbei insbesondere möglichst gezielt an der Filterfläche der Partikelfiltereinrichtung stattfindet, d.h. möglichst unmittelbar an der Filterfläche erfolgt. Insofern kann die Heizvorrichtung bevorzugt entweder für eine direkt auf die Filterfläche gerichtete Wärmestrahlung sorgen oder aber durch physikalische Effekte eine möglichst unmittelbare Wärmeentwicklung an der Filterfläche hervorrufen. "Möglichst unmittelbar" bedeutet dabei, dass der Effekt entweder direkt an der Filterfläche oder aber an einem möglichst dicht hieran liegenden Bauteil hervorgerufen wird.

Neben der Heizvorrichtung verfügt die Reinigungseinrichtung des erfindungsgemäßen Filtersystems zudem über die Fördervorrichtung, die in ihrem Förderbetrieb eine Luftströmung erzeugt, welche von der Filterfläche in Richtung des Depots wirkt. Hierdurch werden die an der Filterfläche abgeschiedenen und über die Heizvorrichtung pulverisierten Stoffe dann über die Strömung der Luft in das Depot überführt. Die Fördervorrichtung kann die an der Filterfläche wirkende Luftströmung dabei zum einen dadurch erzeugen, dass im Bereich des Depots ein Unterdruck aufgebaut und dadurch an der Filterfläche eine Sogwirkung hervorgerufen wird. Zum anderen kann die Luftströmung über die Fördervorrichtung aber auch durch Erzeugung eines Überdrucks realisiert werden, welcher im Bereich der Filterfläche wirksam ist und sich in Richtung des Depots entspannen kann.

Das erfindungsgemäße Filtersystem kann dabei derartig betrieben werden, dass zunächst Fluid von dem Zulauf über die Partikelfiltereinrichtung zu dem Ablauf geleitet wird, so dass hierbei ein Abscheiden von Partikeln aus dem Fluid an der seitens des Zulaufs liegenden Filterfläche der Partikelfiltereinrichtung stattfindet. Hierauf folgend wird das Fluid dann von dem Ablauf her abgepumpt, wobei die Heizvorrichtung in ihrem Heizbetrieb betrieben und dadurch die Filterfläche der Partikelfiltereinrichtung aufgeheizt wird. Dadurch kommt es zum Pulverisieren der an der Filterfläche abgeschiedenen Partikel. Im Weiteren wird die Fördervorrichtung insbesondere nach Ablauf einer Abkühlzeit in ihrem Förderbetrieb betrieben und dadurch die an der Filterfläche in Richtung des Depots wirkende Luftströmung erzeugt. Dadurch kann ein Abscheiden von Partikeln aus einem Fluid, insbesondere aus einem Prozessfluid eines Wäschebehandlungsgeräts, realisiert werden, wobei dabei eine zuverlässige Funktionsweise der Partikelfiltereinrichtung durch deren erfindungsgemäße Reinigung über die Reinigungseinrichtung sichergestellt ist.

Vor dem Abpumpen des Fluids kann die Heizvorrichtung bei noch in dem Filtersystem befindlichen Fluid bereits in ihrem Heizbetrieb betrieben und dadurch die Filterfläche der Partikelfiltereinrichtung aufgeheizt werden. Hierdurch kann erreicht werden, dass die abgeschiedenen Partikel grobkörnig werden und sich an der Filterfläche ansammeln. Bevorzugt wird dies dabei vor Beginn des Abpumpens beendet.

Bevorzugt wird dieses Verfahren dabei über ein Steuergerät durchgeführt, bei welchem es sich um ein Steuergerät des Wäschebehandlungsgeräts oder ein dem Filtersystem zugeordnetes Steuergerät handeln kann. Das erfindungsgemäße Verfahren lässt sich auch als Computerprogrammprodukt verkörpern, welches, wenn es auf einem Prozessor, beispielsweise einem Prozessor eines vorgenannten Steuergeräts läuft, den Prozessor softwaremäßig anleitet, die zugeordneten erfindungsgegenständlichen Verfahrensschritte durchzuführen. In diesem Zusammenhang gehört auch ein computerlesbares Medium zum Gegenstand der Erfindung, auf dem ein vorstehend beschriebenes Computerprogrammprodukt abrufbar gespeichert ist.

Entsprechend einer Ausführungsform der Erfindung weist die Reinigungseinrichtung eine Wellenerzeugungsvorrichtung auf, die in einem Betrieb Ultraschallwellen oder elektromagnetische Wellen erzeugt und die Filterfläche hiermit beaufschlagt. In vorteilhafter Weise kann hierdurch ein Reinigen der Partikelfiltereinrichtung weiter verbessert und/oder das Aufheizen der Filterfläche der Partikelfiltereinrichtung auf zuverlässige Weise gestaltet werden. Im Falle der Verwendung einer als Ultraschall-Einheit ausgestalteten Wellenerzeugungsvorrichtung kann ein Ablösen der Partikel von der Filterfläche unterstützt werden, wodurch sich ein besseres Reinigungsergebnis erzielen lässt. Erzeugt die Wellenerzeugungsvorrichtung hingegen elektromagnetische Wellen, bei welchen es sich vorliegend insbesondere um Mikrowellen handelt, so kann gleichzeitig zu einem Ablösen der Partikel von der Filterfläche auch das Aufheizen der Filterfläche realisiert werden. Dies kann dabei ergänzend zu der Heizvorrichtung erfolgen, wobei die Heizvorrichtung aber auch gleichzeitig die Wellenerzeugungsvorrichtung bilden kann, indem sie zum Aufheizen und zur Unterstützung der Reinigung der Partikelfiltereinrichtung elektromagnetische Wellen erzeugt.

Bei einem Betrieb des erfindungsgemäßen Filtersystems kann dabei vor und/oder nach dem Abpumpen des Fluids und/oder während des Förderbetriebs der Fördervorrichtung die Wellenerzeugungsvorrichtung betrieben und die Filterfläche dabei mit Ultraschallwellen oder elektromagnetische Wellen beaufschlagt werden. Dadurch kann je nach Durchführung eine Nassreinigung der Partikelfiltereinrichtung oder eine Trockenreinigung der Partikelfiltereinrichtung durchgeführt oder unterstützt werden, indem die an der Filterfläche abgeschiedenen Partikel gelöst werden und/oder die Bildung grobkörniger Partikel unterstützt wird.

Gemäß einer Ausgestaltungsmöglichkeit der Erfindung ist das Depot durch einen Luftfilter gebildet, in Richtung dessen Innenraum die Fördervorrichtung die Luftströmung im Fall der Betrieb erzeugt und über welchen Partikel aus dieser Luftströmung abgeschieden werden können. Dadurch kann auf zuverlässige Weise ein Sammeln der über die Fördervorrichtung von der Filterfläche mithilfe der Luftströmung abgeführten Partikel dargestellt werden.

In Weiterbildung der vorgenannten Ausgestaltungsmöglichkeit ist der Luftfilter in einem Sammelgehäuse aufgenommen, an welchem zudem ein Anschluss ausgestaltet ist. Dieser Anschluss weist dabei eine mit dem Innenraum des Luftfilters verbundene Anschlussöffnungen auf und ist für ein externes Anschließen eines Haushaltsstaubsaugers ausgestaltet. Dies hat den Vorteil, dass somit ein Entleeren des Luftfilters auf besonders einfache Weise gestaltet werden kann, indem ein Haushaltsstaubsauger an dem Anschluss angeschlossen und die in dem Luftfilter gesammelten Partikel dann über den Haushaltsstaubsauger abgesaugt werden. In der Folge können die gesammelten Partikel dann auch problemlos über den Hausmüll entsorgt werden. Alternativ oder zusätzlich zu dem Anschluss für den Haushaltsstaubsauger kann ein den Luftfilter aufnehmendes Sammelgehäuse aber auch eine Revisionsöffnung aufweisen, über welche der Luftfilter zum Austausch entnommen werden kann.

Alternativ, bevorzugt aber ergänzend zu der vorgenannten Weiterbildung ist die Fördervorrichtung als Gebläse ausgestaltet, welches hinsichtlich des Luftfilters an einer Abströmseite angeordnet ist und im Förderbetrieb an der Filterfläche eine Sogwirkung in Richtung des Innenraums des Luftfilters hervorruft. Dadurch kann die in Richtung des Depots wirkende Luftströmung auf zuverlässige Weise erzeugt werden. Bevorzugt ist das Gebläse dabei mit einem hochtourigen Antriebsmotor ausgestattet, um eine für die Abführung der abgeschiedenen Partikel in Richtung des Depots ausreichende Sogwirkung erzeugen zu können.

Es ist eine Ausführungsform der Erfindung, dass zwischen der Partikelfiltereinrichtung und dem Depot eine Verbindungsleitung verläuft, in welcher ein Ventil angeordnet ist. Das Ventil nimmt im Förderbetrieb der Fördervorrichtung einen ersten Schaltzustand ein, in welcher das Ventil eine Verbindung zwischen der Partikelfiltereinrichtung und dem Depot über die Verbindungsleitung herstellt, wohingegen das Ventil abseits des Förderbetriebs der Fördervorrichtung die Verbindung zwischen der Partikelfiltereinrichtung und dem Depot trennt. In vorteilhafter Weise kann durch Verwendung des Ventils sichergestellt werden, dass eine Beschickung des Depots nur im Förderbetrieb der Fördervorrichtung stattfindet. Bei Kombination dieser Ausführungsform mit der Variante der Erfindung, bei welcher die Luftströmung an der Filterfläche über ein Gebläse als Sogwirkung erzeugt wird, ist das Ventil bevorzugt als Rückschlagventil gestaltet, welches nur bei Erzeugung eines Unterdrucks im Betrieb des Gebläses öffnet.

Entsprechend einer weiteren Ausgestaltungsmöglichkeit der Erfindung ist zudem eine Antriebseinrichtung vorgesehen, welche in ihrem Betrieb die Partikelfiltereinrichtung in Bewegung versetzt. Durch Bewegung der Partikelfiltereinrichtung kann ein Ablösen von an der Filterfläche abgeschiedenen Partikeln zum Reinigen der Partikelfiltereinrichtung weiter verbessert werden. Besonders bevorzugt versetzt die Antriebseinrichtung die Partikelfiltereinrichtung dabei in eine rotatorische Bewegung. Die Bewegung kann hierbei als Schwingung bis hin zu einer schnellen Bewegung vorliegen.

Bei Betrieb des erfindungsgemäßen Filtersystems wird die Antriebseinrichtung dabei insbesondere vor und/oder nach dem Abpumpen des Fluids und/oder während des Förderbetriebs der Fördervorrichtung betrieben und dadurch die Partikelfiltereinrichtung in Bewegung versetzt. Dadurch kann die Partikelfiltereinrichtung in dem jeweiligen Zwischenschritt jeweils in Bewegung versetzt und dadurch das Ablösen von Partikeln von der Filterfläche hervorgerufen werden.

In Weiterbildung der vorgenannten Ausgestaltungsmöglichkeit ist die Antriebseinrichtung zudem auch als Antrieb einer Pumpe vorgesehen, welche bei Antrieb über die Antriebseinrichtung Fluid in eine Abführung fördert. Dabei dient diese Pumpe insbesondere als Umwälzpumpe.

Besonders bevorzugt ist die Filterfläche zulaufseitig an einem metallischen Sieb der Partikelfiltereinrichtung ausgebildet, wobei dieses Sieb dabei insbesondere aus Edelstahl besteht. Dadurch kann eine für ein Abscheiden von Partikeln geeignete Filterfläche realisiert werden. In Weiterbildung dieser Variante ist die Heizvorrichtung als Draht ausgeführt, welcher das Sieb schraubenförmige verlaufend umgibt und in dem Heizbetrieb das Sieb induktiv aufheizt. Die Heizvorrichtung ist in diesem Fall also als Induktionsheizung gestaltet, wodurch ein gezieltes Aufheizen des metallischen Siebs zuverlässig gestaltet werden kann.

Gemäß einer Ausführungsform der Erfindung ist die Partikelfiltereinrichtung hohlzylindrisch gestaltet, wobei der Zulauf oder der Ablauf radial innenliegend der Partikelfiltereinrichtung und der Ablauf oder der Zulauf radial außen liegend der Partikelfiltereinrichtung vorgesehen ist. Hierdurch kann jeweils ein geeigneter Aufbau des Filtersystems verwirklicht werden.

Gegenstand der Erfindung ist zudem ein Wäschebehandlungsgerät, welches ein Filtersystem nach einem oder mehreren der vorstehend beschriebenen Varianten aufweist. Dabei kann es sich bei diesem Wäschebehandlungsgerät prinzipiell um eine Waschmaschine, einen Waschtrockner oder einen Wäschetrockner handeln. Bevorzugt ist das erfindungsgemäße Filtersystem dabei in das Wäschebehandlungsgerät integriert, so dass also die Komponenten des Filtersystems in einem Gerätegehäuse des Wäschebehandlungsgeräts aufgenommen sind, insbesondere an einer Bodengruppe des Wäschebehandlungsgeräts. Bevorzugt ist das Gerätegehäuse dabei in dem entsprechenden Bereich mit einer Revisionsöffnung ausgestattet, über welche das Filtersystem von außen zugänglich ist. Alternativ kann das Filtersystem aber auch extern zu einem Gerätegehäuse des Wäschebehandlungsgeräts angeordnet sein.

Vorteilhafte Ausführungsformen der Erfindung, die nachfolgend erläutert werden, sind in den Zeichnungen dargestellt. Es zeigt:
- Fig. 1: eine perspektivische Ansicht einer Bodengruppe eines Wäschebehandlungsgeräts im Bereich eines Filtersystems gemäß einer ersten Ausführungsform der Erfindung;
- Fig. 2: eine Schnittansicht des Filtersystems aus Fig. 1; und
- Fig. 3: eine Schnittansicht eines Filtersystems gemäß einer zweiten Ausgestaltungsmöglichkeit der Erfindung.

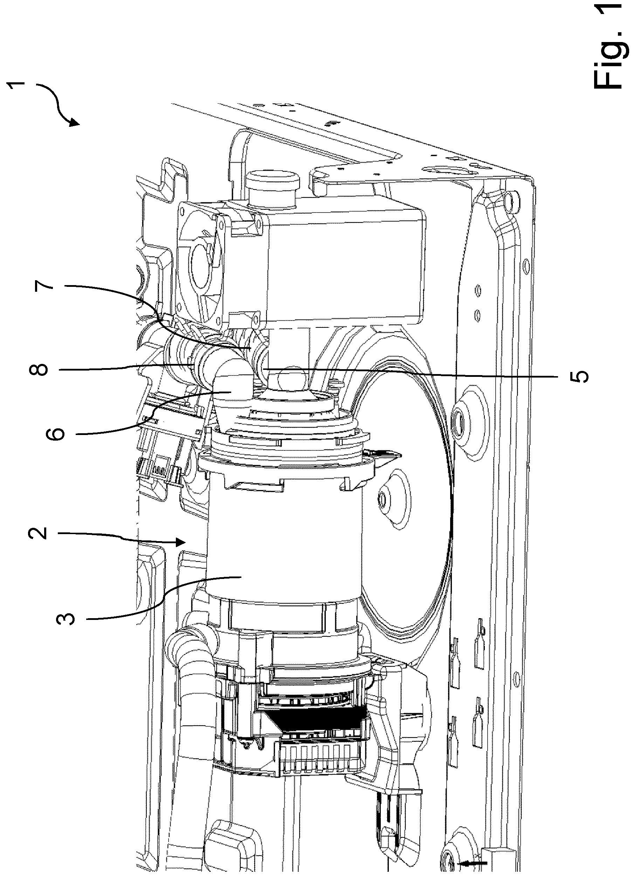

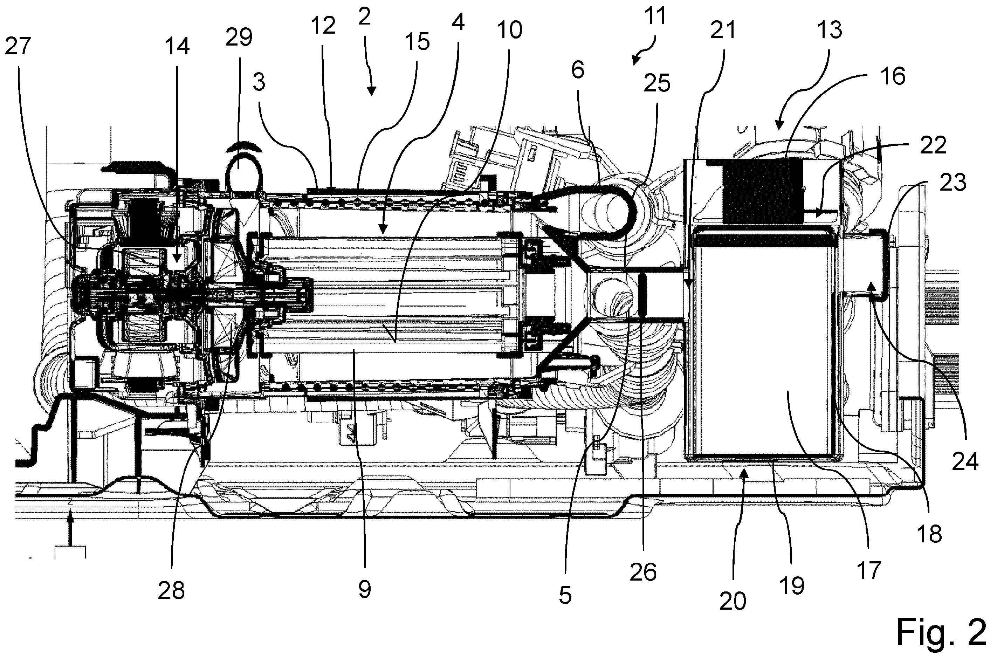

Aus Fig. 1 geht eine perspektivische Ansicht einer Bodengruppe 1 eines Wäschebehandlungsgeräts hervor, bei welchem es sich vorliegend um eine Waschmaschine oder einen Waschtrockner handelt. Teil der Bodengruppe 1 ist vorliegend ein Filtersystem 2, welches entsprechend einer ersten Ausführungsform der Erfindung ausgestaltet und in Fig. 2 im Schnitt gezeigt ist. Als Teil der Bodengruppe 1 ist das Filtersystem 2 somit mit in ein Gerätegehäuse des Wäschebehandlungsgeräts integriert.

Das Filtersystem 2 umfasst ein Filtergehäuse 3, in welchem eine Partikelfiltereinrichtung 4 aufgenommen und das mit einem Zulauf 5 und einem Ablauf 6 ausgestattet ist. Innerhalb der Bodengruppe 1 des Wäschebehandlungsgeräts ist dabei an dem Zulauf 5 ein Zulaufschlauch 7 angeschlossen, über welchen Fluid in Form von Flüssigkeit aus einem Laugenbehälter des Wäschebehandlungsgeräts zu dem Zulauf 5 des Filtergehäuses 3 geführt werden kann. Je nach bei dem Wäschebehandlungsgerät ablaufenden Prozessschritt handelt es sich bei der Flüssigkeit um Wasser oder um Waschlauge. An dem Ablauf 6 ist in der Bodengruppe 1 ferner ein in Fig. 1 zu erkennender Ablaufschlauch 8 angeschlossen, über welchen Flüssigkeit aus dem Ablauf 6 abgeführt werden kann.

Innerhalb des Filtergehäuses 3 ist die Partikelfiltereinrichtung 4 zwischen dem Zulauf 5 und dem Ablauf 6 angeordnet, wobei die Partikelfiltereinrichtung 4 dabei ein hohlzylindrisches Sieb 9 aufweist, welches aus Edelstahl besteht. Hinsichtlich des Siebes 9 ist der Zulauf 5 bei dem Filtergehäuse 3 dabei radial innen liegend und der Ablauf 6 radial außen liegend ausgebildet, so dass über den Zulauf 5 zugeführte Flüssigkeit beim Strömen zum Ablauf 6 das Sieb 9 durchströmen muss. Dabei werden in der Flüssigkeit befindliche Partikel, wie Flusen und insbesondere auch Mikropartikel in Form von Mikroplastik, an einer auf Seiten des Zulaufs 5 definierten Filterfläche 10 des Siebs 9 abgeschieden. Die hierdurch von den Partikeln befreite Flüssigkeit kann dann an dem Ablauf 6 in den Ablaufschlauch 8 gelangen.

Innerhalb des Filtersystems 2 ist der Partikelfiltereinrichtung 4 zudem eine Reinigungseinrichtung 11 zugeordnet, über welche die Filterfläche 10 des Siebs 9 gezielt von den abgeschiedenen Partikeln befreit werden kann, um eine im Betrieb zunehmende Beladung des Siebs 9 und damit auch ein Anstieg des Strömungswiderstandes der vom Zulauf 5 zum Ablauf 6 strömenden Flüssigkeit zu verhindern. Dazu ist bei der Reinigungseinrichtung 11 eine Heizvorrichtung 12, eine Fördervorrichtung 13 und eine Antriebseinrichtung 14 vorgesehen. Die Heizvorrichtung 12 liegt dabei in Form eines Drahtes 15 vor, welcher umliegend zu dem Sieb 9 schraubenförmig im Filtergehäuse 3 verläuft und der als Spule fungiert. In einem Heizbetrieb der Heizvorrichtung 12 wird der Draht 15 mit Strom durchflossen und erzeugt dadurch ein magnetisches Wechselfeld, welches seitens des Siebs 9 Wirbelströme induziert und Ummagnetisierungsverluste hervorruft, wodurch bei dem Sieb 9 induktiv Wärme erzeugt wird und damit ein Aufheizen der Filterfläche 10 stattfindet.

Die Fördervorrichtung 13 ist als Gebläse 16 ausgestaltet, welches im Bereich eines Depots 17 angeordnet ist. Das Depot 17 dient dabei einem Sammeln der an der Partikelfiltereinrichtung 4 abgeschiedenen Partikeln und ist vorliegend durch einen Luftfilter 18 gebildet, der in einem Sammelgehäuse 19 aufgenommen ist. Dabei ist das Sammelgehäuse 19 in dem Filtersystem 2 seitlich zu dem Filtergehäuse 3 angeordnet und nimmt den Luftfilter 18 auf, wobei ein Innenraum 20 des Luftfilters 18 durch eine Öffnung 21 des Sammelgehäuses 19 zugänglich ist, während das Gebläse 16 an einer weiteren, oben liegenden Öffnung 22 des Sammelgehäuses 19 angeordnet ist. Diese Öffnung 22 bildet dabei eine Abströmseite des Luftfilters 18.

Außerdem ist das Sammelgehäuse 19 noch mit einem Anschluss 23 ausgestattet, welcher ebenfalls eine mit dem Innenraum 20 des Luftfilters 18 verbundene Anschlussöffnung 24 bildet. Dieser Anschluss 23 ist dabei derartig gestaltet, dass an dem Anschluss 23 ein Haushaltsstaubsauger von außen angeschlossen werden kann. Zu diesem Zweck ist der Anschluss 23 dabei vorstehend gestaltet, so dass er für den Anschluss des Haushaltsstaubsaugers von außen des Maschinengehäuses des Wäschebehandlungsgeräts her zugänglich ist.

An der Öffnung 21 des Sammelgehäuses 19 ist eine Verbindungsleitung 25 angeschlossen, die neben dem Innenraum 20 des Luftfilters 18 zudem im Bereich des Zulaufs 5 mündet und in der ein Ventil 26 vorgesehen ist. In einem Förderbetrieb der Fördervorrichtung 13, in welchem das Gebläse 16 Luft über die Öffnung 22 ansaugt, nimmt das Ventil 26 einen ersten Schaltzustand ein, in dem das Ventil 26 eine Verbindung zwischen der Partikelfiltereinrichtung 4 und dem Innenraum 20 des Luftfilters 18 herstellt. Dies hat eine Sogwirkung an der Filterfläche 10 des Siebs 9 und damit eine in Richtung des Innenraums 20 des Luftfilters 18 wirkende Luftströmung zur Folge, wodurch abgeschiedene Partikel in den Luftfilter 18 befördert und dort gesammelt werden können.

Die Antriebseinrichtung 14 liegt bei dem Filtersystem 2 als Pumpenantrieb 27 einer Pumpe 28 vor, die als Umwälzpumpe vorgesehen und welche bei Antrieb über den Pumpenantriebs 27 Flüssigkeit in eine Abführung 29 fördert. Neben einem Antrieb der Pumpe 28 setzt der Pumpenantriebs 27 auch das Sieb 9 der Partikelfiltereinrichtung 4 in Drehbewegung, um beim Reinigen des Siebs 9 gezielt ein Ablösen von abgeschiedenen Partikeln zu unterstützen. Die Antriebseinrichtung 14 ist dabei seitlich zu dem Filtergehäuse 3 auf einer entgegengesetzt zum Depot 17 liegenden Seite angeordnet.

Zusätzlich kann die Reinigungseinrichtung 11 der Partikelfiltereinrichtung 4 noch mit einer Wellenerzeugungsvorrichtung ausgestattet sein, über welche in einem Betrieb die Filterfläche 10 gezielt mit Ultraschallwellen oder elektromagnetischen Wellen beaufschlagt werden kann.

Im Betrieb des Wäschebehandlungsgeräts wird das erfindungsgemäße Filtersystem 2 dabei wie folgt betrieben: Am Ende eines Waschprozesses des Wäschebehandlungsgeräts oder im Zuge eines direkt ausgewählten Programms zum Filtern von Partikeln, insbesondere Mikroplastik, wird die zu filternde Waschlauge im Kreislauf über das Filtergehäuse 3 umgewälzt und dabei Partikel an der Filterfläche 10 des Siebs 9 abgeschieden. Während dieses Umwälzvorgangs wird zudem die Heizvorrichtung 12 in ihrem Heizbetrieb betrieben und dadurch die Filterfläche 10 über den Draht 15 induktiv aufgeheizt, wodurch Partikel und hierbei insbesondere Mikroplastik grobkörnig werden und sich an der Filterfläche 10 ansammeln.

Anschließend oder während des Aufheizens wird das Sieb 9 über den Pumpenantriebs 27 in Schwingung versetzt oder schnell gedreht, wodurch sich die abgeschiedenen Partikel mithilfe der Waschlauge von der Filterfläche 10 lösen. Anschließend wird ein Abpumpen der Waschlauge aus dem Filtergehäuse 3 vorgenommen und das Filtergehäuse 3 dadurch entleert.

Hierauf folgend wird erneut ein Aufheizen des Siebs 9 über die im Heizbetrieb betriebene Heizvorrichtung 12 vorgenommen und dadurch Reste der Waschlauge und die bereits abgeschiedenen Partikel getrocknet, wodurch ein Pulverisieren und Zusammenbündeln der Partikel erreicht wird. Bevorzugt wird im Zuge dessen auch ein Antrieb des Siebs 9 über den Pumpenantriebs 27 vorgenommen, wodurch das Sieb 9 langsam mit einer vorgegebenen Drehzahl rotiert wird.

Nach Ablauf einer definierten Kühlzeit wird dann der Förderbetrieb der Fördervorrichtung 13 durch Inbetriebnahme des Gebläses 16 gestartet, wobei über das Ventil 26 dabei die Verbindung des Innenraums 20 des Sammelgehäuses 19 seitens des Zulaufs 5 hergestellt wird. Dadurch wird eine Sogwirkung an der Filterfläche 10 hervorgerufen und hierdurch die abgeschiedenen Partikel in den Luftfilter 18 abgesaugt, wobei auch hierbei über den Pumpenantriebs 27 eine Drehbewegung des Siebs 9 zum Ablösen der Partikel dargestellt werden kann.

Wird im Zuge der Überführung der Partikel in den Luftfilter 18, beispielsweise aufgrund einer Drehzahl des Gebläse 16, eine übermäßige Befüllung des Luftfilters 18 erkannt, so kann eine Bedienperson des Wäschebehandlungsgeräts auf die Notwendigkeit einer Entleerung des Luftfilters 18 aufmerksam gemacht werden. Dieses Entleeren kann dabei mithilfe eines Haushaltsstaubsaugers am Anschluss 23 stattfinden. Alternativ dazu kann auch ein Austausch des Luftfilters 18 vorgesehen sein, wozu eine entsprechende Zugänglichkeit des Filtersystems 2 über eine Revisionsöffnung gegeben sein muss.

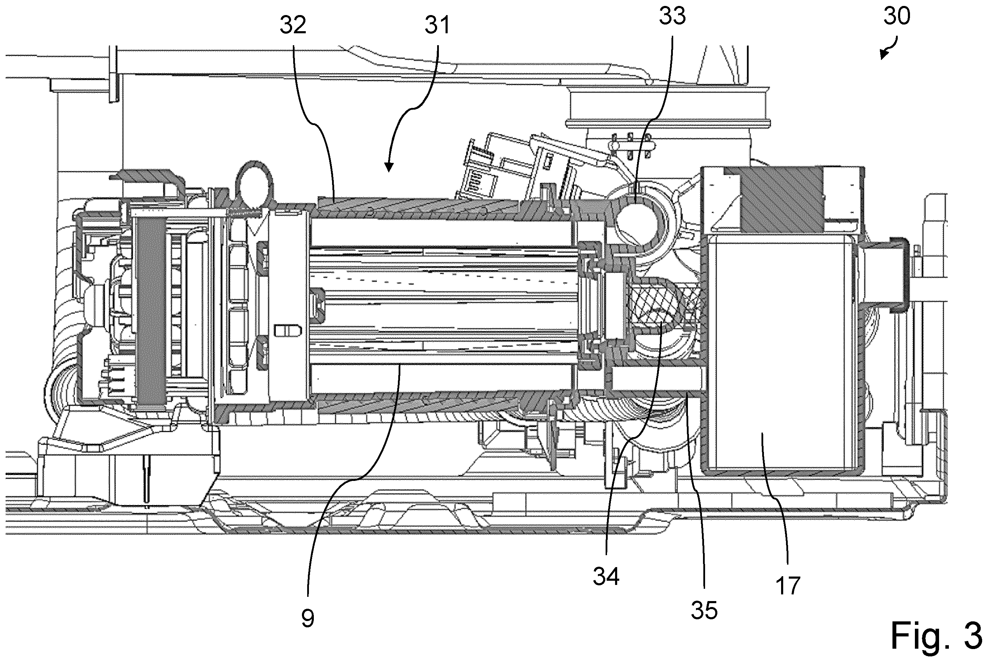

Schließlich zeigt noch Fig. 3 eine Schnittansicht einer Bodengruppe 30 eines Wäschebehandlungsgeräts, bei welchem es sich ebenfalls um eine Waschmaschine oder einen Waschtrockner handeln kann. Die Bodengruppe 30 ist dabei im Bereich eines Filtersystems 31 geschnitten gezeigt, welches entsprechend einer zweiten Ausgestaltungsmöglichkeit der Erfindung ausgebildet ist und im Wesentlichen der vorhergehenden Variante nach den Fig. 1 und 2 entspricht. Einziger Unterschied ist dabei, dass bei einem Filtergehäuse 32 ein Zulauf 33 nun radial außen liegend zu dem hohlzylindrischen Sieb 9 ausgebildet ist, während ein Ablauf 34 radial innen liegend zu dem Sieb 9 vorgesehen ist. In der Folge mündet auch eine das Depot 17 anbindende Verbindungsleitung 35 radial außen liegend zu dem Sieb 9. Ansonsten entspricht die Ausgestaltung gemäß Fig. 3 der Variante nach den Fig. 1 und 2, so dass auf das hierzu Beschriebene Bezug genommen wird. Auch ein Betrieb des Filtersystems 31 gestaltet sich dabei in analoger Weise zu dem zu Fig. 1 und 2 Beschriebenen.

Mittels der erfindungsgemäßen Ausgestaltungen kann jeweils ein Filtersystem geschaffen werden, bei welchem eine Reinigung einer Partikelfiltereinrichtung bedienerfreundlich und gleichzeitig auf zuverlässige Weise möglich ist.

### Bezugszeichenliste:

- 1: Bodengruppe
- 2: Filtersystem
- 3: Filtergehäuse
- 4: Partikelfiltereinrichtung
- 5: Zulauf
- 6: Ablauf
- 7: Zulaufschlauch
- 8: Ablaufschlauch
- 9: Sieb
- 10: Filterfläche
- 11: Reinigungseinrichtung
- 12: Heizvorrichtung
- 13: Fördervorrichtung
- 14: Antriebseinrichtung
- 15: Draht
- 16: Gebläse
- 17: Depot
- 18: Luftfilter
- 19: Sammelgehäuse
- 20: Innenraum
- 21: Öffnung
- 22: Öffnung
- 23: Anschluss
- 24: Anschlussöffnung
- 25: Verbindungsleitung
- 26: Ventil
- 27: Pumpenantrieb
- 28: Pumpe
- 29: Abführung
- 30: Bodengruppe
- 31: Filtersystem
- 32: Filtergehäuse
- 33: Zulauf
- 34: Ablauf
- 35: Verbindungsleitung

## Patentansprüche

1. Filtersystem (2; 31) für ein Wäschebehandlungsgerät, insbesondere für eine Waschmaschine oder einen Waschtrockner, umfassend eine Partikelfiltereinrichtung (4), welche zwischen einem Zulauf (5; 33) und einem Ablauf (6; 34) angeordnet ist, wobei die Partikelfiltereinrichtung (4) zulaufseitig mit einer Filterfläche (10) ausgestattet ist, welche für ein Abscheiden von Partikeln aus einem von dem Zulauf (5; 33) über die Partikelfiltereinrichtung (4) zu dem Ablauf (6; 34) geführten Fluid vorgesehen ist, und wobei eine Reinigungseinrichtung (11) vorgesehen ist, welche einem Abführen von an der Filterfläche (10) der Partikelfiltereinrichtung (4) abgeschiedenen Partikeln in ein Depot (17) dient, mit dem die Partikelfiltereinrichtung (4) dazu seitens des Zulaufs (5; 33) räumlich verbindbar ist, **dadurch gekennzeichnet, dass** die Reinigungseinrichtung (11) eine Heizvorrichtung (12) umfasst, die in ihrem Heizbetrieb die Filterfläche (10) der Partikelfiltereinrichtung (4) aufheizt, und dass die Reinigungseinrichtung (11) zudem eine Fördervorrichtung (13) aufweist, die in ihrem Förderbetrieb an der Filterfläche (10) eine in Richtung des Depots (17) wirkenden Luftströmung erzeugt.

2. Filtersystem nach Anspruch 1, **dadurch gekennzeichnet, dass** die Reinigungseinrichtung eine Wellenerzeugungsvorrichtung aufweist, die in ihrem Betrieb Ultraschallwellen oder elektromagnetische Wellen erzeugt und die Filterfläche hiermit beaufschlagt.

3. Filtersystem (2; 31) nach Anspruch 1 oder 2, **dadurch gekennzeichnet, dass** das Depot (17) durch einen Luftfilter (18) gebildet ist, in Richtung dessen Innenraum (20) die Fördervorrichtung die Luftströmung im Förderbetrieb erzeugt und über welchen Partikel aus der Luftströmung abscheidbar sind.

4. Filtersystem (2; 31) nach Anspruch 3, **dadurch gekennzeichnet, dass** der Luftfilter (18) in einem Sammelgehäuse (19) aufgenommen ist, an welchem zudem ein Anschluss (23) ausgestaltet ist, wobei der Anschluss (23) eine mit dem Innenraum (20) des Luftfilters (18) verbundene Anschlussöffnung (24) aufweist und für ein externes Anschließen eines Haushaltsstaubsaugers ausgestaltet ist.

5. Filtersystem (2; 31) nach Anspruch 3 oder 4, **dadurch gekennzeichnet, dass** die Fördervorrichtung (13) als Gebläse (16) ausgestaltet ist, welches hinsichtlich des Luftfilters (18) an einer Abströmseite angeordnet ist und im Förderbetrieb an der Filterfläche (10) eine Sogwirkung in Richtung des Innenraums (20) des Luftfilters (18) hervorruft.

6. Filtersystem (2; 31) nach einem der vorhergehenden Ansprüche, **dadurch gekennzeichnet, dass** zwischen der Partikelfiltereinrichtung (4) und dem Depot (17) eine Verbindungsleitung (25; 35) verläuft, in welcher ein Ventil (26) angeordnet ist, wobei das Ventil (26) im Förderbetrieb der Fördervorrichtung (13) einen ersten Schaltzustand einnimmt, in welcher das Ventil (26) eine Verbindung zwischen der Partikelfiltereinrichtung (4) und dem Depot (17) über die Verbindungsleitung (25; 35) herstellt, wohingegen das Ventil (26) abseits des Förderbetriebs der Fördervorrichtung (13) die Verbindung zwischen der Partikelfiltereinrichtung (4) und dem Depot (17) trennt.

7. Filtersystem (2; 31) nach einem der vorhergehenden Ansprüche, **dadurch gekennzeichnet, dass** zudem eine Antriebseinrichtung (14) vorgesehen ist, welche in ihrem Betrieb die Partikelfiltereinrichtung (4) in Bewegung versetzt.

8. Filtersystem (2; 31) nach Anspruch 7, **dadurch gekennzeichnet, dass** die Antriebseinrichtung (14) zudem auch als Pumpenantrieb (27) einer Pumpe (28) vorgesehen ist, welche bei Antrieb über die Antriebseinrichtung (14) Fluid in eine Abführung (29) fördert.

9. Filtersystem (2; 31) nach einem der vorhergehenden Ansprüche, **dadurch gekennzeichnet, dass** die Filterfläche (10) zulaufseitig an einem metallischen Sieb (9) der Partikelfiltereinrichtung (4) ausgebildet ist.

10. Filtersystem (2; 31) nach Anspruch 9, **dadurch gekennzeichnet, dass** die Heizvorrichtung (12) als Draht (15) ausgeführt ist, welcher das Sieb (9) schraubenförmig verlaufend umgibt und in dem Heizbetrieb das Sieb (9) induktiv aufheizt.

11. Filtersystem (2; 31) nach einem der vorhergehenden Ansprüche, **dadurch gekennzeichnet, dass** die Partikelfiltereinrichtung (4) hohlzylindrisch gestaltet ist, wobei der Zulauf (5) oder der Ablauf (34) radial innenliegend der Partikelfiltereinrichtung (4) und der Ablauf (6) oder der Zulauf (33) radial außenliegend der Partikelfiltereinrichtung (4) vorgesehen ist.

12. Verfahren zum Betreiben eines Filtersystems (2; 31) nach einem der Ansprüche 1 bis 11,
- wobei zunächst Fluid von dem Zulauf (5; 33) über die Partikelfiltereinrichtung (4) zu dem Ablauf (6; 34) geführt wird,
- wobei hierauf folgend das Fluid von dem Ablauf (6; 34) her abgepumpt wird,
- wobei die Heizvorrichtung (12) in ihrem Heizbetrieb betrieben und dadurch die Filterfläche (10) der Partikelfiltereinrichtung (4) aufgeheizt wird,
- und wobei die Fördervorrichtung (13) in ihrem Förderbetrieb betrieben und hierdurch die an der Filterfläche (10) in Richtung des Depots (17) wirkende Luftströmung erzeugt wird.

13. Verfahren nach Anspruch 12, **dadurch gekennzeichnet, dass** vor dem Abpumpen des Fluids die Heizvorrichtung (12) bei noch in dem Filtersystem (2; 31) befindlichen Fluid bereits in ihrem Heizbetrieb betrieben und dadurch die Filterfläche (10) der Partikelfiltereinrichtung (4) aufgeheizt wird.

14. Verfahren nach Anspruch 12 oder 13 und zum Betreiben eines zumindest nach Anspruch 2 ausgestalteten Filtersystems (2; 31), **dadurch gekennzeichnet, dass** vor und/oder nach dem Abpumpen des Fluids und/oder während des Förderbetriebs der Fördervorrichtung (13) die Wellenerzeugungsvorrichtung betrieben und die Filterfläche (10) dabei mit Ultraschallwellen oder elektromagnetische Wellen beaufschlagt wird.

15. Verfahren nach einem der Ansprüche 12 bis 14 und zum Betreiben eines zumindest nach Anspruch 7 ausgestalteten Filtersystems (2; 31), **dadurch gekennzeichnet, dass** vor und/oder nach dem Abpumpen des Fluids und/oder während des Förderbetriebs der Fördervorrichtung (13) die Antriebseinrichtung (14) betrieben und dadurch die Partikelfiltereinrichtung (4) in Bewegung versetzt wird.

16. Wäschebehandlungsgerät, insbesondere Waschmaschine oder Waschtrockner, umfassend ein Filtersystem (2; 31) nach einem der Ansprüche 1 bis 11.
